# EUROPEAN PATENT APPLICATION

(11) **EP 1 564 664 A2**
(43) Date of publication of application: **17.08.2005**
(21) Application number: 02076151.6
(22) Date of filing: 21.03.2002
(51) Int. Cl.: G06F 17/60

(54) **Method and arrangement for cleaning a deep litter house**

(30) Priority: 21.03.2001 NL 1017658
(71) Applicant: Praktijkonderzoek Veehouderij, 8219 PK Lelystad (NL)
(72) Inventor: Dijk, Gerrit Jan, 8219 PK Lelystad (NL)
(74) Representative: Oudshoorn, Otto Leonard, Dr. Ir.

(57) **Abstract**

The invention relates to a robot (7) for cleaning a deep litter house (1), the floor area of which consists of a thick layer of litter. To robot (7), a camera (8) is connected for detecting freshly produced droppings, which are subsequently are picked up and removed with the aid of a gripping means (10), together with an underlying layer of litter. Next, gripping means (10) is used for dropping fresh litter on the place where the droppings were picked up

## Description

The invention relates to a method for cleaning a floor area of a shed for animals, more in particular for dairy cattle, where the positions of droppings are determined with the aid of a sensor and where the droppings are picked off the floor area with a robot, connected to the sensor.

A method of this kind is disclosed in NL-1002487. For the known method, a loose house is taken as a starting point, where the animals have cow cubicles to their disposal, with a gangway that runs through it. The arrangement is chosen such that the droppings substantially always land in the gangway, which has a floor with a solid, closed surface. The known method in fact solves a relatively simple problem, because the droppings can be found in a well defined area, the cleaning of the floor surface is easy and because generally the gangway is free of animals, which means that a robot provided wit a suction device can do its job without hindrance.

The present invention aims at the cleaning of a floor area of a laying area of a deep litter house. In a deep litter house the animals can move freely and lay down anywhere. The floor area consists of a thick layer of litter, onto which the animals drop their faeces and into which also the urine, produced by the animals must drain away. Strictly speaking, a deep litter house is out of date but nevertheless it is still frequently used, in particular in the organic farming.

The biggest problem of the deep litter house is the hygiene. A buyer of the milk requires a good hygiene, which can only be realised by providing the floor area daily with a fresh layer of litter, of which about 8 to 10 kilos are needed for each animal. This is an important cost factor for the farmer. Moreover, the floor will go up during the housing period of the animals, because the shed can only be cleaned out when the dairy cattle is turned into the field in springtime. For that reason, the actual floor of the deep litter house is lowered, in such a way that at the beginning of the housing period the cattle must go downstairs into the deep litter house and at the end the cattle must go downstairs in order to get out of the deep litter house. Also when walking from the laying area to the feeding- and milking area, it is always necessary to do some climbing, which is uncomfortable especially for the older animals. The inventive method substantially obviates all these drawbacks. To that end, the method is according to an aspect of the invention characterised in that the droppings are picked off the floor with gripping means and that the droppings are picked up together with a layer of underlying litter. Obviously, the specific removal of dirtied litter together with the droppings will improve the hygienic situation and moreover less litter will be used. Also the floor level will go up less rapidly, on the one hand because less litter can be added and on the other hand because litter is being removed during the housing period. Finally, thanks to the fact that litter is also picked up, the gripping means will grow less dirty, which means that it can be used for other purposes as well.

A favourable realisation of the inventive method is characterised in that after the removal of the droppings, the gripping means pick up fresh litter from a litter store and drop it on a place where droppings and underlying litter were picked up recently. On the one hand this results in a substantive reduction of the workload for the farmer and on the other hand the fresh litter will be put down on those places where it is obviously needed.

A related problem of the deep litter house is that in the laying area faeces that may be present cannot be picked up if an animal is standing too close to it, because that could involve a safety risk for the animal. According to another aspect of the invention, the inventive method solves this problem and is characterised in that with the aid of the sensor also the position of animals, present in a laying area is determined, and that droppings are picked up only when no animals are present in a vicinity of the droppings. A favourable realisation of the inventive method which obviates a long waiting time, is characterised in that the gripping means can be used for driving away the animals from a previously determined position. This may be performed for example with the aid of a small electric shock. Generally, an animal must experience this only once, as it will run away a next time when the gripping means approach.

The invention also relates to an arrangement for cleaning a floor area of a shed for animals, more in particular for dairy cattle, provided with a sensor for detecting droppings, present on the floor, a robot connected to the sensor and a manure pick up tool connected to the robot, for picking up the droppings. The inventive arrangement is characterised in that the manure pick up tool is a gripping means, arranged for picking up the droppings together with a layer of underlying litter. Thanks to the removal of the droppings together with the underlying litter the hygiene in the shed will improve, while also less litter can be used. Moreover, the floor of the deep litter house will go up less rapidly, on the one hand because less litter is supplied and on the other hand because litter is being removed during the housing period.

A further favourable embodiment of the inventive arrangement is characterised in that the robot is moreover arranged for picking up fresh litter from a litter store and for dropping it on a place where droppings and underlying litter were picked up. From a hygienic point of view it therefore important that the gripping means remain substantially clean during the picking up of droppings, because an underlying layer of litter is picked up as well.

A favourable embodiment according to a further aspect of the invention is characterised in that de sensor is moreover arranged for determining the position of animals, present in a laying area, and that the robot is arranged for picking up droppings exclusively in an environment where no animals are present.

A favourable embodiment of the inventive arrangement which can be implemented in a simple manner in an existing, substantially rectangular deep litter house is characterised in that de arrangement comprises a rail system, mounted at the top of the deep litter house, on which the robot can move. Preferably, the rail system is placed in such a manner that the robot can reach the entire floor area, while it may be expanded with trajectories via which the picked up droppings can be removed and via which fresh litter can be fetched.

A favourable alternative embodiment of the inventive arrangement, which can be implemented in a simple manner in an existing circular or semicircular deep litter house, is characterised in that de arrangement comprises a column, substantially centrally positioned in the deep litter house, provided with a boom on which the robot is mounted.

A further favourable embodiment of the inventive arrangement is characterised in that the sensor comprises an optical detector, for detecting heat radiated by the droppings or working on a base of differences in colour or in brightness between the droppings and their environment.

The invention will now be further explained with a reference to the following figures, in which:
- Fig. 1: represents a cross section of a deep litter house, provided with an arrangement according to the invention;
- Fig. 2: represents a top view of this embodiment;
- Fig. 3: represents a top view of a deep litter house, provided with an alternative arrangement according to the invention;
- Fig. 4: represents a possible embodiment of a gripping means;
- Fig. 5: represents a block diagram of the control of the arrangement.

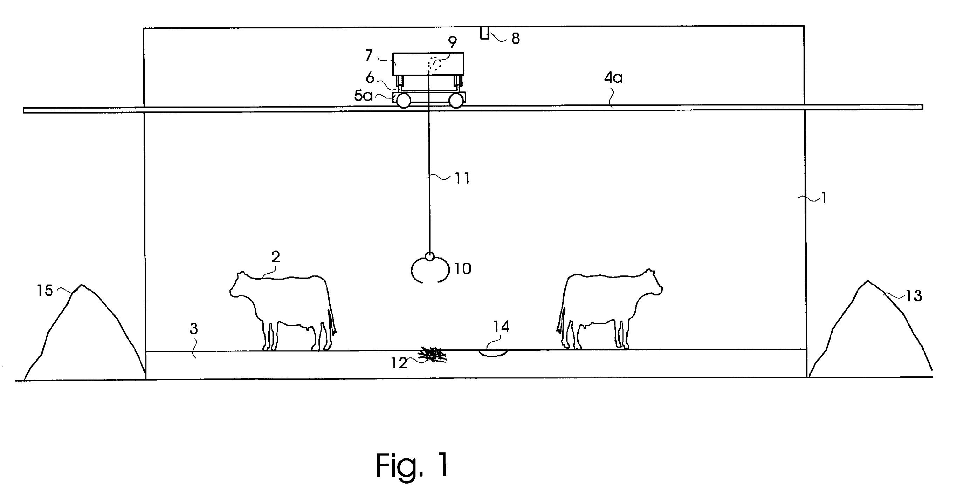

Fig. 1 represents a cross section of a deep litter house 1, provided with an arrangement according to the invention. In deep litter house 1 the cattle 2 stands on a layer 3, consisting of litter, for example chopped straw, sawdust or sand, which layer 3 will go up during the housing period because fresh litter is added on a daily base in order to cover the manure, produced by the cattle 2. This is necessary for maintaining a sufficiently high hygienic environment, in particular for dairy cattle. At the end of the housing period, the cattle is driven into the field, after which the layer of litter, which may be as thick as one meter, can be removed. According to the invention, deep litter house 1 is provided with a system of rails 4a,4b, of which only rail 4 is visible in the figure, mounted onto the roof or to the walls or to a truss, in such a manner that they run on both sides in a longitudinal direction of the deep litter house. Onto rail 4a a cart 5a is mounted and onto rail 4b a cart 5b is mounted and a rail 6 is mounted onto carts 5a,5b which runs crosswise to the longitudinal direction of the deep litter house and onto which a robot 7 can move, in such a manner that in a combined movement of carts 5a,5b and of robot 7, robot 7 can reach any position of the laying area. Moreover, a camera 8 is mounted onto the roof of deep litter house 1, which is connected to robot 7. Periodically, camera 8 scans layer 3 and controls if droppings have been produced. If droppings are detected, then their co-ordinates are passed to robot 7 which steers in an obvious manner the carts 6a,6b and robot 7 such that a gripping means 10, which is connected to robot 7 by a winch system 9, is positioned precisely above the detected droppings. Next, winch system 9 lowers gripping means 10 in an opened position until it reaches layer 3. When gripping means 10 arrives at layer 3, this can be detected in a simple way by winch system 9, because the load of a cable 11 will get less. Next, winch system 9 closes gripping means 10 in a way well known in the art, which will scrape the droppings off the floor, together with an underlying layer of litter 12. Next, the contents of gripping means 10 are transported to a manure heap 13 via an opening in deep litter house 1. Finally, a hole 14, which was formed when picking up the droppings is filled with fresh litter, which is conveyed by robot 7 and gripping means 10 from a supply 15. Filling the hole is necessary, as layer 3 must be kept up in order to absorb or let pass the urine, produced by cattle 2.

When lowering gripping means 10, care must be taken not to touch the animals. For that purpose, camera 8 has been programmed such that co-ordinates will only be passed for positions where no animals are present within a given radius. If animals are present, then the co-ordinates are memorised until the condition is met. For the detection of droppings and of animals, the area of layer 3 may be divided into cells. For the detection of droppings, a detection method is used which is as such well known in the art, according to which the brightness or the temperature of a cell to be examined is compared with the brightness or temperature of the surrounding cells. For the detection of animals, one determines on the basis of brightness or temperature which cells are covered by an animal and round these cells an outline is made in an obvious manner. Droppings can be picked up when all outlines have a distance of for example more than one meter from the cell in which the droppings have been detected. It is also possible to provide gripping means 10 with for example a number of resilient projections and to connect these projections to an electric fence apparatus, well known in the art. The distance between the outlines can be taken much smaller then, as an animal which stands too close to gripping means 10 will be passed a small electric shock which will make it step aside.

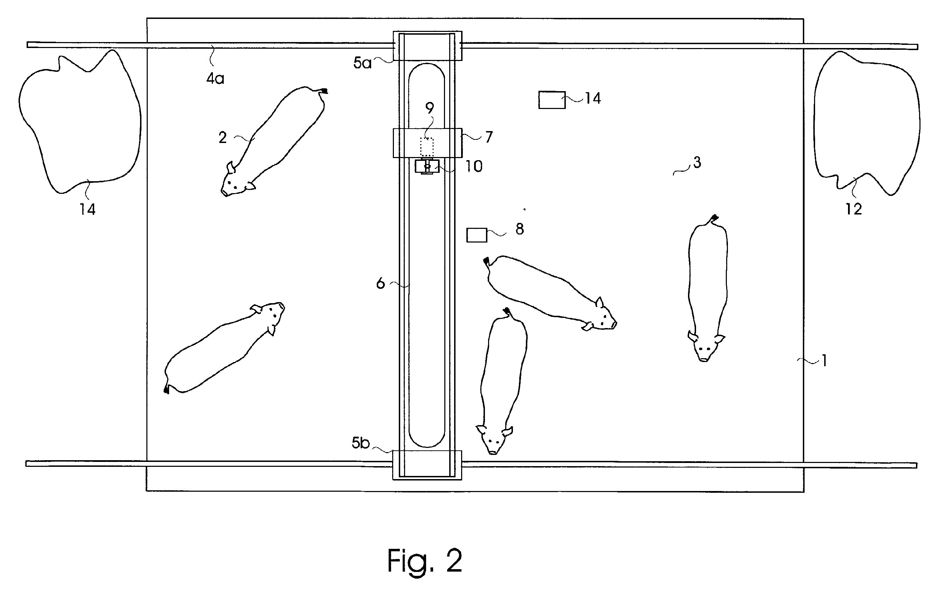

Fig. 2 represents a top view of this embodiment, with deep litter house 1 and cattle 2. Deep litter house 1 is provided with a system of rails 4a,4b, mounted onto the roof or to the walls or to a truss, in such a manner that they run on both sides in a longitudinal direction of the deep litter house. Onto rail 4a a cart 5a is mounted and onto rail 4b a cart 5b is mounted and a rail 6 is mounted onto carts 5a,5b which runs crosswise to the longitudinal direction of the deep litter house and onto which a robot 7 can move, in such a manner that in a combined movement of carts 5a,5b and of robot 7, robot 7 can reach any position of the laying area and pick up droppings, as explained with a reference to figure 1.

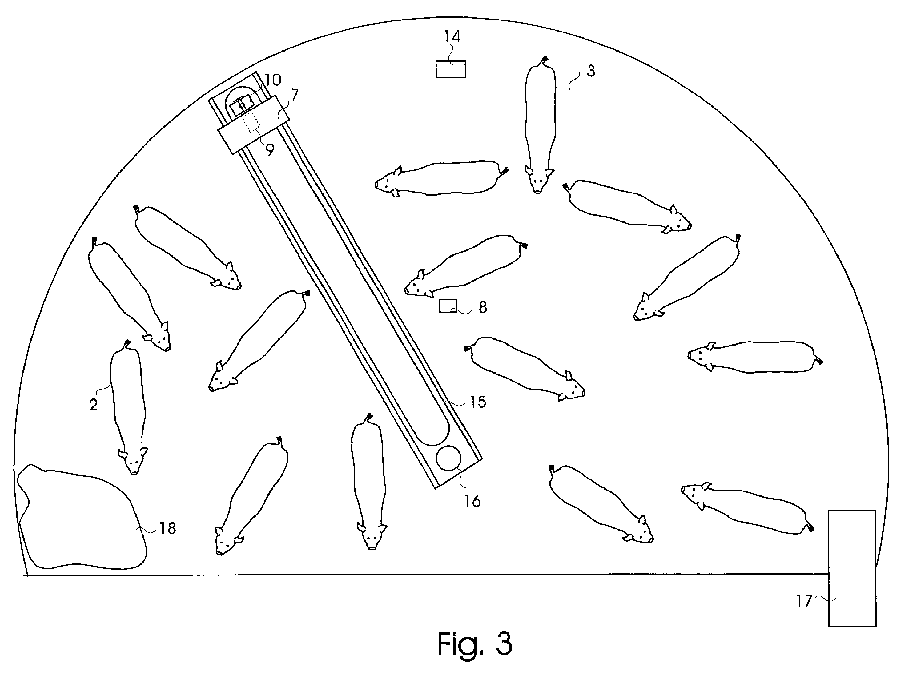

Fig. 3 represents a top view of a deep litter house 1 with a semicircular shape, in which cattle 2 stands on a layer 3, consisting of litter, which layer 3 will grow during the housing period because fresh litter is added on a daily base in order to cover the manure, produced by the cattle 2. According to this embodiment of the invention, deep litter house 1 is provided with a boom 15 in the form of a profile, which is mounted to a central column 16, provided with drive means (not shown). Along boom 15, a robot 7 can move, such that in a combined movement of the drive means and of robot 7, robot 7 can reach any position of the laying area. Moreover, a camera 8 is mounted onto the roof of deep litter house 1, which is connected to robot 7. Periodically, camera 8 scans layer 3 and controls if droppings have been produced. If droppings are detected, then their co-ordinates are passed to robot 7 and to the drive means, which are steered in an obvious manner such that a gripping means 10, which is connected to robot 7 with a winch system 9, is positioned precisely above the detected droppings, after which winch system 9 lowers gripping means 10 in an opened position until it reaches layer 3. When gripping means 10 arrives at layer 3, this can be detected in a simple way by winch system 9. Next, winch system 9 closes in a way well known in the art gripping means 10, which will scrape the droppings off the floor, together with an underlying layer of litter. The contents of gripping means 10 are dumped onto a conveyor belt 17. A hole 14 which was formed when picking up the droppings is filled with fresh litter, which is taken off a supply 18 and conveyed by robot 7 and gripping means 10.

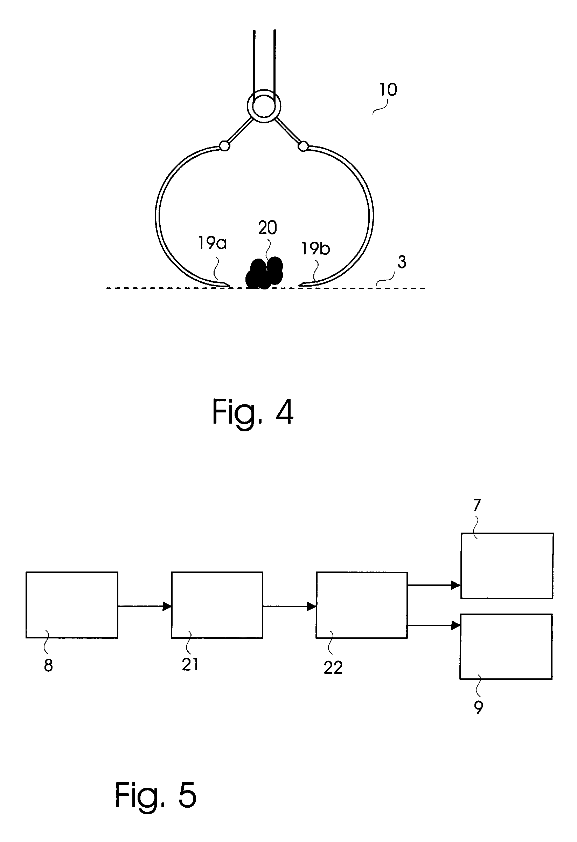

Fig. 4 represents a possible embodiment of a gripping means 10, consisting of two jaws 19a,19b, which are placed onto the litter layer 3 on both sides of the droppings 20 to be picked up, after which gripping means 10 is closed. In doing so, the teeth will scrape off a layer of litter before they reach the reach droppings 20, as a result of which droppings 20 will end in the closed gripping means 10 on top of a layer of litter, whereby gripping means 10 remains substantially clean.

Fig. 5 represents a block diagram of the control of the arrangement, consisting of a camera 8, coupled to a video-processor 21, to which image data is supplied and which has been programmed such that it generates co-ordinates of detected droppings and sends the co-ordinates to a steering 22 which in turn steers robot 7 and winch 9. Videoprocessor 21 also determines the position of animals and supplies co-ordinates to steering 22 only when no animals are detected in the neighbourhood of the detected droppings.

## Claims

1. Method for cleaning a floor area of a shed for animals, more in particular for dairy cattle, where the positions of droppings are determined with the aid of a sensor and where the droppings are picked off the floor area with a robot, connected to the sensor, **characterised in that** the droppings are picked off the floor with gripping means and that the droppings are picked up together with a layer of underlying litter.

2. Method according to claim 1, **characterised in that** after the removal of the droppings, the gripping means pick up fresh litter from a litter store and drop it on a place where droppings and underlying litter were picked up recently.

3. Method according to claim 2, **characterised in that** with the aid of the sensor also the position of animals, present in a laying area is determined, and that droppings are picked up if no animals are present in a vicinity of the droppings.

4. Method according to claim 3, **characterised in that** the gripping means can be used for driving away the animals from a previously determined position.

5. Arrangement for cleaning a floor area of a shed for animals, more in particular for dairy cattle, provided with a sensor for detecting droppings, present on the floor, a robot connected to the sensor and a manure pick up tool connected to the robot, for picking up the droppings, **characterised in that** the manure pick up tool is a gripping means, arranged for picking up the droppings together with a layer of underlying litter.

6. Arrangement according to claim 5, **characterised in that** the robot is moreover arranged for picking up fresh litter from a litter store and for dropping it on a place where droppings and underlying litter were picked up.

7. Arrangement according to claim 5 of 6, **characterised in that** de sensor is moreover arranged for determining the position of animals, present in a laying area, and that the robot is arranged for picking up droppings exclusively in an environment where no animals are present.

8. Arrangement according to claim 7, **characterised in that** de arrangement comprises a rail system, mounted at the top of the deep litter house, on which the robot can move.

9. Arrangement according to claim 7, **characterised in that** de arrangement comprises a column, substantially centrally positioned in the deep litter house, provided with a boom on which the robot is mounted.

10. Arrangement according to one of the claims 5 t/m 9, **characterised in that** the sensor comprises an optical detector, for detecting heat radiated by the droppings or working on a base of differences in colour or in brightness between the droppings and their environment.
